(19) Europäisches Patentamt / European Patent Office / Office européen des brevets

(11) **EP 4 442 905 A1**

(12) # EUROPÄISCHE PATENTANMELDUNG

(43) Veröffentlichungstag:
**09.10.2024 Patentblatt 2024/41**

(21) Anmeldenummer: **24163487.2**

(22) Anmeldetag: **14.03.2024**

(51) Internationale Patentklassifikation (IPC):
*E01C 21/00* (2006.01)   *E01C 23/088* (2006.01)

(52) Gemeinsame Patentklassifikation (CPC):
**E01C 23/088; E01C 21/00**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **28.03.2023 DE 102023107779**

(71) Anmelder: **Wirtgen GmbH**
**53578 Windhagen (DE)**

(72) Erfinder: **Menzenbach, Christoph**
**53577 Neustadt (DE)**

(74) Vertreter: **Oppermann, Frank**
**OANDO Oppermann & Oppermann**
**Wilhelminenstrasse 1a**
**65193 Wiesbaden (DE)**

(54) **SELBSTFAHRENDE BAUMASCHINE ZUM BEARBEITEN DES BODENS**

(57) Die Erfindung betrifft eine selbstfahrende Baumaschine zum Bearbeiten des Bodens, insbesondere einen Stabilisierer oder Recycler. Die erfindungsgemäße Baumaschine verfügt über eine Steuereinrichtung 22 für eine automatische Fahrtrichtungsumkehr, die mit der Antriebseinrichtung 21 für die Räder 2, 3 oder Kettenlaufwerke zusammenwirkt. Die Steuereinrichtung 22 ist derart konfiguriert, dass die Antriebseinrichtung 21 nach Empfang eines Fahrtrichtungsumkehr-Steuersignals die vorgegebene erste Geschwindigkeit, mit der die Baumaschine in die erste Fahrtrichtung fährt, bis zum Stillstand der Baumaschine verringert und nach dem Stillstand der Baumaschine die Räder oder Kettenlaufwerke in die entgegengesetzte Richtung antreibt, wobei die Antriebeinrichtung die Geschwindigkeit in die zweite Fahrtrichtung bis zu einer vorgegebenen zweiten Geschwindigkeit erhöht. Ein besonderer Aspekt der Erfindung liegt darin, dass eine automatische Steuerung nicht nur der Antriebseinrichtung, sondern auch weiterer Komponenten der Baumaschine in Abhängigkeit von unterschiedlichen Fahrsituationen erfolgt.

**EP 4 442 905 A1**

Fig. 2

**Beschreibung**

Die Erfindung betrifft eine selbstfahrende Baumaschine zum Bearbeiten des Bodens, insbesondere einen Stabilisierer oder Recycler.

Zur Stabilisierung von ungenügend tragfähigen Böden sind Stabilisierer bekannt, mit denen ein pulverförmiges oder flüssiges Bindemittel in den Boden eingebracht wird, um dessen Tragfähigkeit zu erhöhen. Die bekannten Recycler unterscheiden sich von den Stabilisierern dadurch, dass die Recycler nicht nur der Verbesserung oder Verfestigung von Böden, sondern auch der Sanierung schadhafter Deckschichten von Straßen oder Wegen dienen.

Stabilsierer oder Recycler verfügen über einen von auf dem Boden aufstehenden Rädern oder Kettenlaufwerken getragenen Maschinenrahmen und ein an dem Maschinenrahmen angeordnetes Walzengehäuse, in dem eine drehbare Fräs-/Mischwalze zum Bearbeiten des Bodens vorgesehen ist. Unter der Bearbeitung des Bodens werden nachfolgend sämtliche Arbeitsschritte verstanden, mit denen der Boden abgetragen bzw. abgefräst und/oder abgetragener bzw. abgefräster Boden gemischt werden kann. Der zu bearbeitende Boden kann beispielsweise eine bestehende Verkehrsfläche (Straße), von dem Material abgefräst werden soll, Aufschüttungen, Verfüllungen oder ein gewachsener Boden sein.

Zum Antrieb der Räder oder Kettenlaufwerke verfügen die bekannten Stabilsierer oder Recycler über eine Antriebseinrichtung, die im Allgemeinen mehrere Hydraulikmotoren umfasst, die den einzelnen Rädern oder Laufwerken zugeordnet sind. Zum Ansteuern der Antriebseinrichtung ist eine Steuereinrichtung vorgesehen, die einen ersten Fahrmodus vorsieht, in dem die Laufwerke derart angetrieben werden, dass die Baumaschine mit einer vorgegebenen Geschwindigkeit in eine erste Fahrtrichtung fährt, und einen zweiten Fahrmodus vorsieht, in dem die Räder oder Kettenlaufwerke derart angetrieben werden, dass die Baumaschine mit einer vorgegebenen Geschwindigkeit in eine zweite Fahrtrichtung fährt, die der ersten Fahrtrichtung entgegengesetzt ist. Die erste Fahrtrichtung ist eine Hauptfahrtrichtung, die im Allgemeinen die Vorwärtsfahrt ist. Der erste Fahrmodus kann daher der Vorwärtsfahrt und der zweite Fahrtmodus der Rückwärtsfahrt entsprechen. Der Fahrzeugführer kann für die Vorwärts- oder Rückwärtsfahrt eine gewünschte Geschwindigkeit einstellen.

Zur manuellen Steuerung durch den Fahrzeugführer verfügen die selbstfahrenden Baumaschinen über eine Bedieneinheit mit verschiedenen Bedienelementen. Der Fahrzeugführer kann die Baumaschine durch Betätigung der Bedienelemente starten oder stoppen und die gewünschte Geschwindigkeit für die Vorwärts- oder Rückwärtsfahrt vorgeben. Diese Einstellungen kann der Fahrzeugführer während eines Transportbetriebs, in dem die Baumaschine von einem Ort zu einem anderen Ort versetzt werden soll, oder während eines Arbeitsbetriebs vornehmen, in dem die Baumaschine den Boden bearbeitet.

Während des Transport- und Arbeitsbetriebs der Baumaschine stellt sich in der Praxis das Problem der Umkehr der Fahrtrichtung, d. h. von der Vorwärtsfahrt in die Rückwärtsfahrt oder von der von der Rückwärtsfahrt in die Vorwärtsfahrt. Die Fahrtrichtungsumkehr stellt an den Fahrzeugführer relativ hohe Anforderungen, da die Baumaschine zunächst aus der vorgegebenen Geschwindigkeit zum Stillstand gebracht werden muss, um dann wieder in der entgegengesetzten Fahrtrichtung auf eine vorgegebene Geschwindigkeit beschleunigt zu werden. Dabei ist zu berücksichtigen, dass der Fahrzeugführer bei einer Fahrtrichtungsumkehr nicht nur die Antriebseinrichtung steuern muss, sondern auch für die ordnungsgemäße Funktion sämtlicher anderer Komponenten der Baumaschine verantwortlich ist.

Der Erfindung liegt die Aufgabe zugrunde, eine selbstfahrende Baumaschine zu schaffen, die sich in unterschiedlichen Fahrsituationen von dem Fahrzeugführer einfach und sicher bedienen lässt.

Die Lösung dieser Aufgabe erfolgt mit den Merkmalen des Patentanspruchs 1. Die abhängigen Ansprüche betreffen vorteilhafte Ausführungsformen der Erfindung.

Die nachfolgend beschriebenen Ausführungsformen der Erfindung können eines oder mehrere der nachfolgend genannten Merkmale oder Merkmalskombinationen umfassen. Ein mit einem unbestimmten Artikel bezeichnetes Merkmal kann auch mehrfach vorhanden sein, wenn der unbestimmte Artikel nicht mit einem ausdrücklichen Hinweis auf eine nur einmalige Verwendung zu verstehen ist. Eine Bezeichnung von Merkmalen mit einem Zahlwort, beispielsweise "erstes und zweites", schließt nicht aus, dass über die durch das Zahlwort angegebene Anzahl hinaus diese Merkmale noch weitere Male vorhanden sein können. Bei der Beschreibung sämtlicher Ausführungsformen ist der Ausdruck "kann" auch als "vorzugsweise" oder "zweckmäßigerweise" zu verstehen.

Die erfindungsgemäße selbstfahrende Baumaschine verfügt über eine Steuereinrichtung für eine automatische Fahrtrichtungsumkehr, die mit der Antriebseinrichtung für die Räder oder Kettenlaufwerke zusammenwirkt. Nachfolgend wird unter einer Antriebseinrichtung eine Einrichtung verstanden, mit der die Räder oder Kettenlaufwerke in Bewegung versetzt werden. Die Antriebseinrichtung kann eine beliebige Antriebseinrichtung, beispielsweise eine hydraulische, mechanische, pneumatische oder elektrische Antriebseinrichtung sein, die mehrere Antriebskomponenten, beispielsweise Hydraulikmotoren, umfassen kann, wobei jedem Rad bzw. Kettenlaufwerk ein Hydraulikmotor zugeordnet sein kann.

Die Steuereinrichtung ist derart konfiguriert, dass die Antriebseinrichtung nach Empfang eines Fahrtrichtungsumkehr-Steuersignals die vorgegebene erste Geschwindigkeit, mit der die Baumaschine in die erste Fahrtrichtung fährt, bis zum Stillstand der Baumaschine verringert und nach dem Stillstand der Baumaschine die Räder oder Kettenlaufwerke in die entgegengesetzte Richtung antreibt, wobei die Antriebeinrichtung die Geschwindigkeit in die zweite Fahrtrichtung bis zu einer vorgegebenen zweiten Geschwindigkeit erhöht.

Die Verringerung bzw. Erhöhung der Geschwindigkeit kann nach einem vorgegebenen Geschwindigkeitsprofil erfolgen, wobei für die beiden Fahrtrichtungen die gleichen oder unterschiedliche Geschwindigkeitsprofile vorgegeben werden können, beispielsweise unterschiedliche Geschwindigkeitsprofile für die Vorwärtsfahrt im Transport- oder Arbeitsbetrieb oder die Rückwärtsfahrt im Transport- oder Arbeitsbetrieb. Die Geschwindigkeitsprofile können von verschiedenen Betriebsparametern abhängig sein, beispielsweise von der zuvor vorgegebenen Vorschubgeschwindigkeit, der Motorlast, der Fräswalzendrehzahl, der Last auf die Hubsäulen der Baumaschine etc.

Die Fahrtrichtungsumkehr kann durch ein Fahrtrichtungsumkehr-Steuersignal initiiert werden, wobei die Richtungsumkehr nach Empfang des Steuersignals automatisch erfolgt. Das Steuersignal kann durch Betätigung eines Bedienelements durch den Maschinenführer erzeugt werden, so dass der Maschinenführer den Zeitpunkt bestimmen kann, an dem die Maschine die Fahrtrichtung umkehren soll. Eine Fahrtrichtungsumkehr kann aber auch dadurch eingeleitet werden, dass ein Fahrtrichtungsumkehr-Steuersignal automatisch erzeugt wird, beispielsweise wenn sich die Baumaschine an einem bestimmten Ort befindet, beispielsweise das Ende der Fahrspur erreicht hat. Die Standorterfassung kann mit den bekannten technischen Mitteln, beispielsweise mit einem Satellitennavigationssystem (GNSS) oder auf der Grundlage der Erkennung einer vorgegebenen Markierung erfolgen. Das Steuersignal kann auch nach Zurücklegen einer vorgegebenen Wegstrecke oder Ablauf eines vorgegebenen Zeitintervalls erzeugt werden.

Die erste Geschwindigkeit, in der sich die Baumaschine in die erste Fahrtrichtung bewegt, ist vorzugsweise größer als die zweite Geschwindigkeit, in der sich die Baumaschine in die zweite Fahrtrichtung bewegt. Dabei wird davon ausgegangen, dass sich die Baumaschine in Vorwärtsfahrt schneller als in Rückwärtsfahrt bewegen soll.

Die erste und/oder zweite Geschwindigkeit vor bzw. nach der Fahrtrichtungsumkehr können vom Fahrzeugführer vorgegebene Geschwindigkeiten sein. Der Fahrzeugführer braucht nur eine der beiden Geschwindigkeiten, insbesondere nur die erste Geschwindigkeit einstellen, wobei die zweite Geschwindigkeit, die vorzugsweise kleiner als die erste Geschwindigkeit ist, dann automatisch ermittelt werden kann.

Eine Ausführungsform der erfindungsgemäßen Baumaschine weist eine Eingabe- und/oder Bedieneinheit und eine Speichereinheit auf, wobei die Eingabe- und/oder Bedieneinheit und die Speichereinheit derart konfiguriert sind, dass ein Wert für die erste und zweite Geschwindigkeit mit der Eingabeeinheit eingebbar und in der Speichereinheit speicherbar ist. Die Steuereinrichtung ist derart konfiguriert, dass die Steuereinrichtung den Wert für die erste und zweite Geschwindigkeit aus der Speichereinheit ausliest. Mit der Eingabeeinheit kann der Fahrzeugführer daher die Geschwindigkeiten eingeben und auch jederzeit ändern. Die Eingabe- und/oder Bedieneinheit kann beispielsweise einen Joystick, ein Pedal oder ein Bedienelement eines berührungsempfindlichen Bildschirms (Touchscreen) aufweisen.

Eine weitere Ausführungsform der erfindungsgemäßen Baumaschine sieht vor, dass die Baumaschine eine Eingabe- und/oder Bedieneinheit und eine Speichereinheit aufweist, die derart konfiguriert sind, dass ein Wert für die erste Geschwindigkeit mit der Eingabe- und/oder Bedieneinheit eingebbar und in der Speichereinheit speicherbar ist. Die Steuereinrichtung ist derart konfiguriert, dass aus dem Wert der ersten Geschwindigkeit nach einer vorgegebenen funktionalen Beziehung, die in der Speichereinheit abgelegt ist, ein Wert für die zweite Geschwindigkeit berechnet wird, der in der Speichereinheit abgelegt wird. Diese funktionale Beziehung kann beispielsweise eine lineare Gleichung sein.

Ein besonderer Aspekt der Erfindung liegt darin, dass eine automatische Steuerung nicht nur der Antriebseinrichtung, sondern auch weiterer Komponenten der Baumaschine in Abhängigkeit von unterschiedlichen Fahrsituationen erfolgt.

Eine Ausführungsform der erfindungsgemäßen Baumaschine verfügt über eine Fräs-/Mischwalzen-Verstelleinrichtung zum Verstellen der Höhe der Fräs-/Mischwalze gegenüber dem Boden, wobei die Steuereinrichtung mit der Fräs-/Mischwalzen-Verstelleinrichtung derart zusammenwirkt, dass bei einer Fahrtrichtungsumkehr eine Höhenverstellung der Fräs-/Mischwalze gegenüber dem Boden erfolgt. Bei dieser Ausführungsform wird der Maschinenführer bei einer Fahrtrichtungsumkehr auch von der Steuerung der Höheneinstellung der Fräs-/Mischwalze entlastet.

Eine weitere Ausführungsform der erfindungsgemäßen Baumaschine verfügt über eine in die Hauptfahrtrichtung weisende, vordere und eine entgegen der Hauptfahrtrichtung weisende, hinteren Walzenklappe, die den Fräs-/Mischraum des Walzengehäuses zumindest teilweise verschließen können, und über eine Walzenklappen-Verstelleinrichtung zum Verstellen der Stellung der vorderen Walzenklappe und der hinteren Walzenklappe. Nachfolgend wird unter der vorderen Walzenklappe die in Hauptfahrtrichtung weisende Walzenklappe und unter der hinteren Walzenklappe die entgegen der Hauptfahrtrichtung weisende Walzenklappe verstanden, wobei die Hauptfahrtrichtung im Allgemeinen die Vorwärtsfahrt ist. Die Steuereinrichtung wirkt mit der Walzenklappen-Verstelleinrichtung derart zusammen, dass bei einer Fahrtrichtungsumkehr eine Verstellung der vorderen Walzenklappe und/oder der hinteren Walzenklappe erfolgt. Bei dieser Ausführungsform wird der Maschinenführer bei einer Fahrtrichtungsumkehr auch von der Steuerung der Walzenklappen entlastet.

Die Steuereinrichtung kann einen Transportbetriebsmodus vorsehen, in dem die Steuereinrichtung die Fräs-/Mischwalzen-Verstelleinrichtung derart ansteuert, dass die Fräs-/Mischwalze in eine obere Position angehoben ist, in der die Fräs-/Mischwalze mit dem Boden außer Eingriff ist, und die Steuereinrichtung kann einen Arbeitsbetriebsmodus vorsehen, in dem die Steuereinrichtung die Fräs-/Mischwalzen-Verstelleinrichtung derart ansteuert, dass die Fräs-/Mischwalze in eine untere Position abgesenkt ist, in der die Fräs-/Mischwalze mit dem Boden in Eingriff ist. Unter einem Eingriff mit dem Boden wird nachfolgend verstanden, dass die Fräs-/Mischwalze den Boden auffräst und/oder den aufgenommenen Boden durchmischt.

Eine weitere Ausführungsform der erfindungsgemäßen Baumaschine sieht vor, dass die Steuereinrichtung derart konfiguriert ist, dass bei einer Fahrtrichtungsumkehr die Steuereinrichtung die Fräs-/Mischwalzen-Verstelleinrichtung derart ansteuert, dass ein automatischer Wechsel von dem Arbeitsbetriebsmodus in den Transportbetriebsmodus oder ein automatischer Wechsel von dem Transportbetriebsmodus in den Arbeitsbetriebsmodus erfolgt. Bei dieser Ausführungsform braucht der Maschinenführer für eine Fahrtrichtungsumkehr nur vorzugeben, ob die Maschine ein Wendemanöver für einen Wechsel von einem Arbeitsbetrieb in einen Transportbetrieb oder umgekehrt ausführen soll.

In Abhängigkeit von unterschiedlichen Fahrsituationen kann die erfindungsgemäße Baumaschine die folgenden Steuermodi vorsehen, die durch ein Fahrtrichtungsumkehr-Steuersignal initiiert werden können. Die unterschiedlichen Steuermodi erlauben dem Maschinenführer, die Baumaschine in den unterschiedlichen Fahrsituationen einfach unter sicher zu steuern.

Für einen ersten Fahrtrichtungsumkehr-Steuermodus mit einer Fahrtrichtungsumkehr in dem Transportmodus kann die Steuereinrichtung derart konfiguriert sein, dass die Steuereinrichtung die Fräs-/Mischwalzen-Verstelleinrichtung derart ansteuert, dass die Position der Fräs-/Mischwalze während der Fahrtrichtungsumkehr beibehalten wird und die Walzenklappen-Verstelleinrichtung derart ansteuert, dass die Position der Walzenklappen während der Fahrtrichtungsumkehr beibehalten wird. Diesen Steuermodus kann der Maschinenführer vorgeben, wenn die Maschine nur von einem Ort an den anderen Ort versetzt werden soll.

Für einen zweiten Fahrtrichtungsumkehr-Steuermodus mit einer Fahrtrichtungsumkehr in dem Arbeitsbetriebsmodus kann die Steuereinrichtung derart konfiguriert sein, dass die Steuereinrichtung die Fräs-/Mischwalzen-Verstelleinrichtung derart ansteuert, dass die Position der Fräs-/Mischwalze während der Fahrtrichtungsumkehr beibehalten wird und die Steuereinrichtung vor der Richtungsumkehr die Walzenklappen-Verstelleinrichtung der vorderen und hinteren Walzenklappe derart ansteuert, dass die vordere Walzenklappe sich in einer angehobenen Position befindet und die hintere Walzenklappe in einer Schwimmstellung auf dem Boden aufliegt und nach der Richtungsumkehr die ursprünglich hintere und nunmehr in die neue Fahrtrichtung weisende Walzenklappe sich in einer angehobenen Position befindet und die vordere Walzenklappe in einer Schwimmstellung auf dem Boden aufliegt. Diesen Steuermodus kann der Maschinenführer vorgeben, wenn die Baumaschine in derselben Fahrspur wieder rückwärts zurückfahren soll, um das aufgefräste Material nach der Fahrtrichtungsumkehr durchzumischen.

Für einen dritten Fahrtrichtungsumkehr-Steuermodus für eine Fahrtrichtungsumkehr mit einem Wechsel von dem Transportmodus in den Arbeitsbetriebsmodus kann die Steuereinrichtung derart konfiguriert sein, dass die Steuereinrichtung die Fräs-/Mischwalzen-Verstelleinrichtung derart ansteuert, dass die Fräs-/Mischwalze von der oberen Position, in der die Fräs-Mischwalze mit dem Boden außer Eingriff ist, in die untere Position abgesenkt wird, in der die Fräs-/Mischwalze mit dem Boden in Eingriff ist.

Diesen Steuermodus kann der Maschinenführer vorgeben, wenn sich die Baumaschine nach einer Transportfahrt beispielsweise an den Anfang bzw. das Ende der Fahrspur zur Bodenbearbeitung in die entgegengesetzte Fahrtrichtung bewegen soll.

Zur Ansteuerung der Fräs-/Mischwalze kann die Steuereinrichtung in dem dritten Fahrtrichtungsumkehr-Steuermodus derart konfiguriert sein, dass die Steuereinrichtung die Fräs-/Mischwalzen-Verstelleinrichtung derart ansteuert, dass die Fräs-/Mischwalze mit einer vorgegebenen Geschwindigkeit abgesenkt wird, wobei die Geschwindigkeit, mit der die Fräs-/Mischwalze abgesenkt wird, eine sich über die von der Baumaschine zurückgelegte Wegstrecke konstante Geschwindigkeit oder eine sich über die von der Baumaschine zurückgelegte Wegstrecke ändernde Geschwindigkeit ist. Die Frästiefenänderung kann zu einem Zeitpunkt vor und/oder während der Verringerung der Geschwindigkeit der Baumaschine und/oder beim Stillstand der Baumaschine und/oder während der Erhöhung der Geschwindigkeit eingeleitet werden. Die Änderung der Frästiefe beim Absenken der Fräs-/Mischwalze kann an die unterschiedlichen Gegebenheiten angepasst werden und kann von verschiedenen Betriebsparametern abhängig sein, beispielsweise dem Vorschub der Baumaschine, der Beschaffenheit des zu bearbeitenden Bodens oder der Menge zugegebenen Bindemittels.

Zur Ansteuerung der Walzenklappen kann die Steuereinrichtung in dem dritten Fahrtrichtungsumkehr-Steuermodus derart konfiguriert sein, dass die Steuereinrichtung die Walzenklappen-Verstelleinrichtung der vorderen und hinteren Walzenklappe derart ansteuert, dass sich die vordere Walzenklappe nach dem Absenken der Fräs-/Mischwalze in dem Arbeitsbetriebsmodus in einer angehobenen Position befindet und die hintere Walzenklappe in einer Schwimmstellung auf dem Boden aufliegt oder sich die hintere Walzenklappe in einer angehobenen Position befindet und die vordere Walzenklappe in einer Schwimmstellung auf dem Boden aufliegt. Folglich werden die Walzenklappen in Abhängigkeit von der Fahrtrichtung automatisch in die für den Arbeitsbetrieb vorgesehene Stellung gebracht.

Die Steuereinrichtung kann einen vierten Fahrtrichtungsumkehr-Steuermodus für eine Fahrtrichtungsumkehr mit einem Wechsel von dem Arbeitsbetriebsmodus in den Transportmodus vorsehen, in dem die Steuereinrichtung die Fräs-/Mischwalzen-Verstelleinrichtung derart ansteuert, dass die Fräs-/Mischwalze von der unteren Position, in der die Fräs-/Mischwalze mit dem Boden in Eingriff ist, in die obere Position angehoben wird, in der die Fräs-/Mischwalze mit dem Boden außer Eingriff ist. Diesen Steuermodus kann der Maschinenführer vorgeben, wenn die Baumaschine nach einer Bearbeitung des Bodens, beispielsweise am Ende der Fahrspur, zurücksetzen soll.

In dem vierten Fahrtrichtungsumkehr-Steuermodus kann die Steuereinrichtung derart konfiguriert sein, dass die Steuereinrichtung die Fräs-/Mischwalzen-Verstelleinrichtung derart ansteuert, dass die Fräs-/Mischwalze mit einer vorgegebenen Geschwindigkeit angehoben wird, wobei die Geschwindigkeit, mit der die Fräs-/Mischwalze angehoben wird, eine sich über die von der Baumaschine zurückgelegte Wegstrecke konstante Geschwindigkeit oder eine sich über die von der Baumaschine zurückgelegte Wegstrecke ändernde Geschwindigkeit ist. Die Frästiefenänderung kann zu einem Zeitpunkt vor und/oder während der Verringerung der Geschwindigkeit der Baumaschine und/oder beim Stillstand der Baumaschine und/oder während der Erhöhung der Geschwindigkeit eingeleitet werden. Die Änderung der Frästiefe beim Anheben der Fräs-/Mischwalze kann an die unterschiedlichen Gegebenheiten angepasst werden und kann von verschiedenen Betriebsparametern abhängig sein, beispielsweise dem Vorschub der Baumaschine, der Beschaffenheit des zu bearbeitenden Bodens oder der Menge zugegebenen Bindemittels.

Das Absenken und Anheben der Fräs-/Mischwalze für einen Wechsel von dem Transportmodus in den Arbeitsbetriebsmodus bzw. Arbeitsbetriebsmodus in den Transportmodus kann nach einem von der Steuereinrichtung vorgegebenen Geschwindigkeitsprofil erfolgen. Das Geschwindigkeitsprofil kann ein fest vorgegebenes Profil sein, das in einer Speichereinrichtung hinterlegt ist, oder das Geschwindigkeitsprofil kann in Abhängigkeit von den momentanen Betriebsparametern der Baumaschine ermittelt werden.

Bei einem Wechsel von dem Transportmodus in den Arbeitsbetriebsmodus kann auch eine Einrichtung zur Zugabe von Bindemittel automatisch aktiviert werden, so dass im Arbeitsbetriebsmodus eine Bindemittelzugabe erfolgt. Umgekehrt kann bei einem Wechsel von dem Arbeitsbetriebsmodus in den Transportmodus eine Einrichtung zur Zugabe von Bindemittel automatisch deaktiviert werden, so dass im Transportmodus keine Bindemittelzugabe erfolgt.

Bei einer Fahrtrichtungsumkehr können grundsätzlich sämtliche Einstellungen von Betriebsparametern der selbstfahrenden Baumaschine vorgenommen oder vorgegebene Einstellungen verändert werden oder bestimmte Betriebszustände eingestellt oder verändert werden, um die Betriebsparameter oder Betriebszustände an die neue Fahrtrichtung anzupassen. Diese Einstellungen können wiederum in Abhängigkeit davon vorgenommen werden, ob sich die Baumaschine in einem bestimmten Betriebsmodus befindet, insbesondere in einem Transportmodus oder Arbeitsbetriebsmodus.

Beispielsweise sehen selbstfahrende Baumaschinen im Allgemeinen bestimmte Lenkmodi vor, wobei eine Lenkung nur mit den vorderen Rädern oder Kettenlaufwerken, nur mit den hinteren Rädern oder Kettenlaufwerken, mit den vorderen und hinteren Rädern oder Kettenlaufwerken in die gleiche Richtung oder mit den vorderen und hinteren Rädern oder Kettenlaufwerken in entgegengesetzter Richtung erfolgt. Bei einer Richtungsumkehr von einer Vorwärtsfahrt in eine Rückwärtsfahrt kann beispielsweise von einem Lenkmodus, in dem eine Lenkung nur mit den vorderen Rädern oder Kettenlaufwerken erfolgt, in einen Lenkmodus umgeschaltet werden, in dem eine Lenkung mit den vorderen und hinteren Rädern oder Kettenlaufwerken in die gleiche Richtung erfolgt. Dieser Wechsel des Lenkmodus bei der Fahrtrichtungsumkehr aus der Vorwärtsfahrt in die Rückwärtsfahrt am Ende einer Fahrspur führt dazu, dass die Baumaschine in der Rückwärtsfahrt zu der Fahrspur seitlich versetzt werden kann, so dass die Baumaschine aus der Fahrspur herausgefahren werden kann.

Bei einer Fahrtrichtungsumkehr können auch Assistenzsysteme der Baumaschine aktiviert oder deaktiviert werden oder deren Einstellungen verändert werden. Wenn die Baumaschine beispielsweise über ein insbesondere auf einer Satellitennavigation beruhendes Assistenzsystem verfügt, das nach einer Richtungsumkehr ein Zurückfahren der Baumaschine in derselben Fahrspur erlaubt, kann dieses Assistenzsystem nach einer Richtungsumkehr aktiviert werden, so dass die Baumaschine in derselben Fahrspur zurückfährt.

Wenn die Baumaschine über ein Kamerasystem zur Überwachung von Hindernissen in der der Umgebung verfügt, kann beispielsweise bei einer Fahrtrichtungsumkehr von der Vorwärtsfahrt in die Rückwärtsfahrt eine Rückfahrkamera aktiviert werden. Eine Frontkamera kann dann deaktiviert werden.

Im Folgenden werden verschiedene Ausführungsbeispiele der Erfindung unter Bezugnahme auf die Zeichnungen naher erläutert.

Es zeigen:

Fig. 1　　　　ein Ausführungsbeispiel einer erfindungsgemäßen selbstfahrenden Baumaschine in teilweiser geschnittener Darstellung,

Fig. 2　　　　ein Schaubild zur Veranschaulichung der Funktion der einzelnen Komponenten der Baumaschine von Fig. 1,

Fig. 3       die Baumaschine im Transportmodus in stark vereinfachter Darstellung während der Vorwärtsfahrt,

Fig. 4       die Baumaschine im Arbeitsbetriebsmodus in stark vereinfachter Darstellung während der Vorwärtsfahrt,

Fig. 5A bis 5D       die Bewegung der Baumaschine bei einer automatischen Fahrtrichtungsumkehr,

Fig. 6       die Baumaschine im Arbeitsbetriebsmodus in stark vereinfachter Darstellung während der Rückwärtsfahrt,

Fig. 7A und 7B       ein Ausführungsbeispiel für die Bewegung der Baumaschine bei einer Fahrtrichtungsumkehr mit einem Wechsel von einem Transportmodus in einen Arbeitsbetriebsmodus,

Fig. 8A und 8B       ein weiteres Ausführungsbeispiel für die Bewegung der Baumaschine bei einer Fahrtrichtungsumkehr mit einem Wechsel von einem Transportmodus in einen Arbeitsbetriebsmodus,

Fig. 9A und 9B       ein weiteres Ausführungsbeispiel für die Bewegung der Baumaschine bei einer Fahrtrichtungsumkehr mit einem Wechsel von einem Transportmodus in einen Arbeitsbetriebsmodus,

Fig. 10A und 10B       ein Ausführungsbeispiel für die Bewegung der Baumaschine bei einer Fahrtrichtungsumkehr mit einem Wechsel von einem Arbeitsbetriebsmodus in einen Transportmodus,

Fig. 11A und 11B       ein weiteres Ausführungsbeispiel für die Bewegung der Baumaschine bei einer Fahrtrichtungsumkehr mit einem Wechsel von einem Arbeitsbetriebsmodus in einen Transportmodus,

Fig. 12A und 12B       ein weiteres Ausführungsbeispiel für die Bewegung der Baumaschine bei einer Fahrtrichtungsumkehr mit einem Wechsel von einem Arbeitsbetriebsmodus in einen Transportmodus und

Fig. 13A und 13B       ein weiteres Ausführungsbeispiel für die Bewegung der Baumaschine bei einer Fahrtrichtungsumkehr mit einem Wechsel von einem Arbeitsbetriebsmodus in einen Transportmodus.

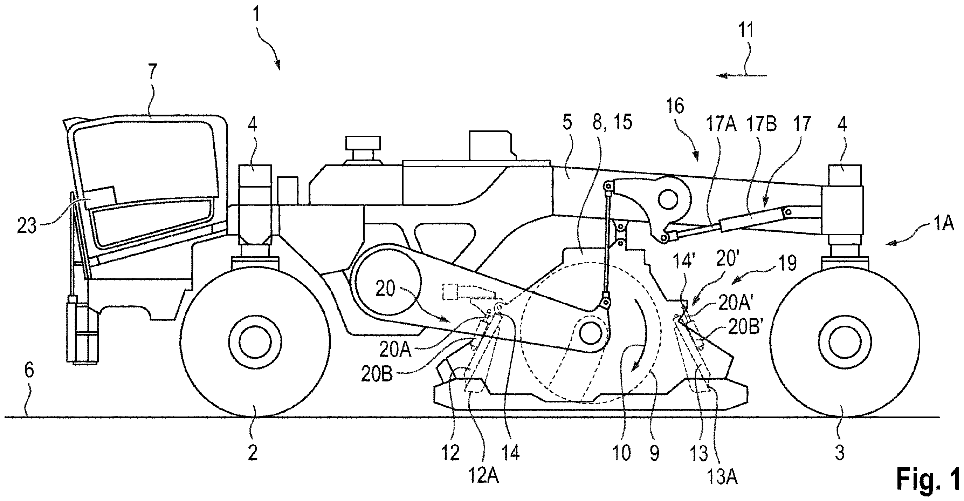

Fig. 1 zeigt eine selbstfahrende Baumaschine 1 in der Seitenansicht, die in der EP 2 977 514 B1 im Einzelnen beschrieben ist. Die Baumaschine 1 weist ein Fahrwerk 1A auf, das zwei in der Hauptfahrtrichtung (Vorwärtsfahrt) vordere Räder 2 und zwei hintere Räder 3 umfasst. An den Rädern 2, 3 sind jeweils Hubsäulen 4 befestigt, die einen Maschinenrahmen 5 tragen, so dass der Maschinerahmen in der Höhe gegenüber dem Boden 6 verstellbar ist. Am Maschinenrahmen 5 befindet sich der Fahrerstand 7, an dem eine Bedieneinheit 23 vorgesehen ist, die einen Touchscreen aufweisen kann. Die Räder werden von einer in Fig. 1 nicht dargestellten Antriebsvorrichtung angetrieben, die den Rädern zugeordnete in Fig. 1 nicht dargestellte Hydraulikmotoren umfasst.

Zwischen den Laufwerken ist an dem Maschinenrahmen 5 ein nach unten offenes Walzengehäuse 8 angeordnet, das einen Fräs-/Mischraum bildet und in dem sich eine Fräs-/Mischwalze 9 befindet. Die Rotationsrichtung der Fräs-/Mischwalze ist mit einem Pfeil 10 gekennzeichnet. Das Walzengehäuse 8 weist eine in der Hauptarbeitsrichtung 11 (Vorwärtsfahrt) vordere Walzenklappe 12 und eine in Hauptarbeitsrichtung hintere Walzenklappe 13 auf, welche jeweils um eine quer zur Längsrichtung des Maschinenrahmens verlaufende Schwenkachse 14 bzw. 14' schwenkbar sind. An den Seiten ist das Walzengehäuse von sich in Längsrichtung erstreckenden Seitenteilen 15 verschlossen, die in Fig. 1 nur andeutungsweise dargestellt sind.

Zur Höhenverstellung der Fräs-/Mischwalze 9 weist die Bodenfräsmaschine eine Fräs-/Mischwalzen-Verstelleinrichtung 16 auf, die bei dem vorliegenden Ausführungsbeispiel eine Kolben-Zylinderanordnung 17 mit einem Kolben 17A und einem Zylinder 17B umfasst. Durch Betätigung des Kolbens 17A der Kolben-Zylinder-Anordnungen 17 kann die Fräs-/Mischwalze 9 in der Höhe gegenüber dem Maschinenrahmen 5 bzw. dem Boden 6 verstellt werden, wobei sich die Achse der Fräs-/Mischwalze auf einer Kreisbahn bewegt. Eine Höhenverstellung der Fräs-/Mischwalze 9 gegenüber dem Boden 6 ist alternativ oder zusätzlich auch durch Einfahren bzw. Ausfahren der Hubsäulen 4 möglich.

Zur Einstellung der Position der in der Hauptarbeitsrichtung vorderen und hinteren Walzenklappe 12, 13 ist eine Walzenklappen-Verstelleinrichtung 19 vorgesehen, die einen an der jeweiligen Walzenklappe 12, 13 angreifenden Aktor 20, 20' aufweist. Bei dem vorliegenden Ausführungsbeispiel sind die Aktoren Kolben-Zylinder-Anordnungen 20, 20', deren Kolben 20A, 20A' an dem Maschinenrahmen 5 und deren Zylinder 20B, 20B' an der vorderen bzw. hinteren Walzenklappe 12, 13 schwenkbar befestigt sind. Durch Bewegen des jeweiligen Kolbens kann die vordere bzw. hintere Walzenklappe 12, 13 nach oben bzw. unten verschwenkt werden, so dass sich die untere Kante 12A, 13A der vorderen bzw. hinteren Walzenklappe 12, 13 gegenüber dem Boden 6 anhebt oder absenkt.

Die Antriebseinrichtung zum Antrieb der Räder, die Fräs-/Mischwalzen-Verstelleinrichtung und die Walzenklappen-Verstelleinrichtung umfassen noch weitere der Einfachheit halber nicht dargestellte, dem Fachmann aber allgemein bekannte Komponenten, insbesondere Hydraulikkomponenten, beispielsweise Hydraulikpumpen, Hydraulikventile, Hydraulikleitungen, Sensoren etc..

Zur Ansteuerung der einzelnen Komponenten der Antriebseinrichtung zum Antrieb der Räder, der Fräs-/Mischwalzen-Verstelleinrichtung und der Walzenklappen-Verstelleinrichtung ist eine Steuereinrichtung vorgesehen. Diese Steuereinrichtung kann mehrere Steuereinheiten umfassen, von denen eine Steuereinheit oder mehrere Steuereinheiten Bestandteil einer zentralen Steuereinrichtung der Baumaschine sein können. Die Antriebseinrichtung zum Antrieb der Räder, die Fräs-/Mischwalzen-Verstelleinrichtung und die Walzenklappen-Verstelleinrichtung können beispielsweise jeweils über eine eigene Steuereinheit verfügen, die nachfolgend als eine gemeinsame Steuereinrichtung verstanden wird.

Die Steuereinrichtung kann beispielsweise einen allgemeinen Prozessor, einen digitalen Signalprozessor (DSP) zur kontinuierlichen Bearbeitung digitaler Signale, einen Mikroprozessor, eine anwendungsspezifische integrierte Schaltung (ASIC), einen aus Logikelementen bestehenden integrierten Schaltkreis (FPGA) oder andere integrierte Schaltkreise (IC) oder Hardware-Komponenten aufweisen, um die Ansteuerung der Aktoren auszuführen. Auf den Hardware-Komponenten kann ein Datenverarbeitungsprogramm (Software) laufen.

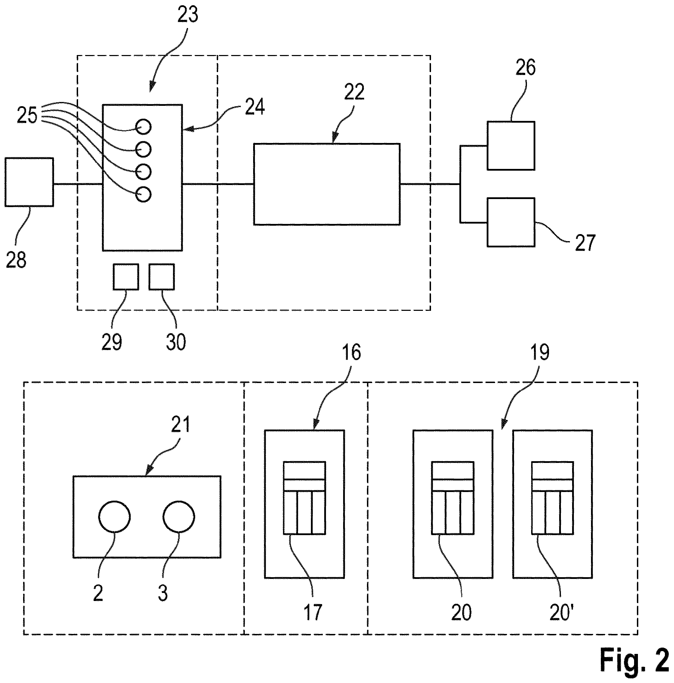

Fig. 2 zeigt ein Schaubild zur Veranschaulichung der Funktion der einzelnen Komponenten der Baumaschine. In Fig. 2 sind eine Antriebseinrichtung 21 zum Antrieb der Räder, die Fräs-/Mischwalzen-Verstelleinrichtung 16 mit der Kolben-Zylinder-Anordnung 17 für die Höhenverstellung der Fräs-/Mischwalze 9, die Walzenklappen-Verstelleinrichtung 19 zur Betätigung der Walzenklappen 12, 13 über die Kolben-Zylinder-Anordnungen 20, 20' sowie eine Steuereinrichtung 22 stark vereinfacht dargestellt. Fig. 2 zeigt auch die am Fahrstand vorgesehene Bedieneinheit 23, die einen Touchscreen 24 aufweist, auf dem mehrere Schaltflächen 25, 29, 30 dargestellt sind, die von dem Maschinenführer zur Auswahl unterschiedlicher Steuermodi betätigt werden können.

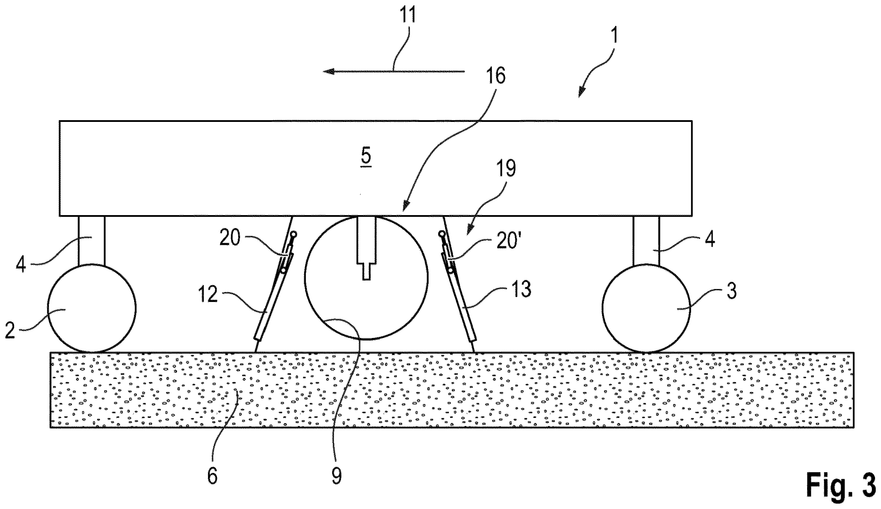

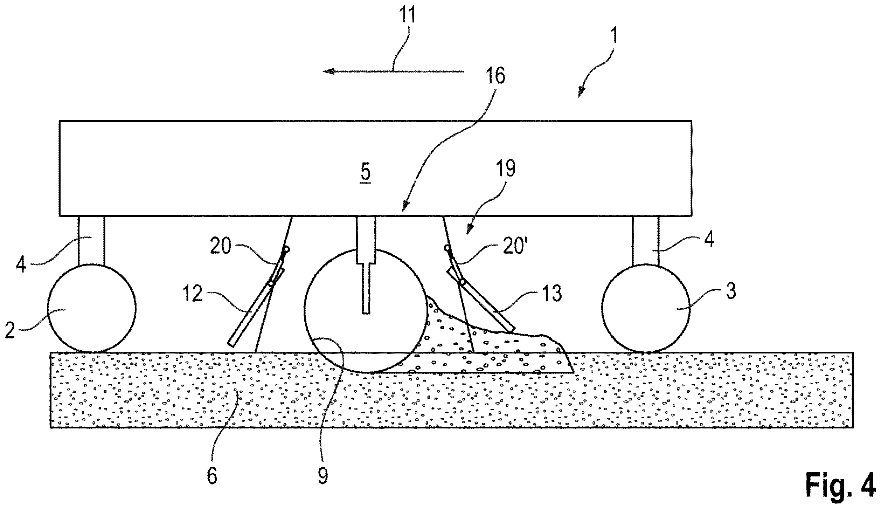

Die erfindungsgemäße Baumaschine, die in einem Transportmodus oder in einem Arbeitsbetriebsmodus betrieben werden kann, erlaubt eine automatische Umkehr der Fahrtrichtung. Fig. 3 zeigt eine stark vereinfachte Darstellung der Baumaschine 1 in dem Transportmodus, in dem die Fräs-/Mischwalze 9 angehoben und nicht mit dem Boden 6 in Eingriff ist, und Fig. 4 zeigt eine stark vereinfachte Darstellung der Baumaschine 1 in dem Arbeitsbetriebsmodus, in dem die Fräs-/Mischwalze 9 abgesenkt und mit dem Boden 6 in Eingriff ist. Die einzelnen Komponenten sind mit denselben Bezugszeichen wie in den Figuren 1 und 2 bezeichnet.

Die Steuereinrichtung 22 ist derart konfiguriert, dass in Abhängigkeit von Steuersignalen unterschiedliche Steuermodi vorgegeben werden können.

Die Steuereinrichtung 22 ist derart konfiguriert, dass die Kolben-Zylinder-Anordnung 17 der Fräs-/Mischwalzen-Verstelleinrichtung 16 nach Empfang eines Steuersignals derart angesteuert wird, dass nach Empfang des Steuersignals die Fräs-/Mischwalze 9 für einen Wechsel von dem in Fig. 3 gezeigten Transportmodus in den in Fig. 4 gezeigten Arbeitsbetriebsmodus aus der oberen Position in die untere Position abgesenkt wird und nach Empfang eines Steuersignals die Fräs-/Mischwalze 9 für einen Wechsel von dem Transportmodus in den Arbeitsbetriebsmodus aus der unteren Position (Fig. 4) in die obere Position (Fig. 3) angehoben wird.

Die Steuereinrichtung ist weiterhin derart konfiguriert, dass die vordere bzw. hintere Kolben-Zylinder-Anordnung 20, 20' der Walzenklappen-Verstelleinrichtung 19 nach Empfang eines Steuersignals derart angesteuert wird, dass die Walzenklappen 12, 13 sich in der Transportposition in einer heruntergeklappten Position befinden, in der die Walzenklappen das Walzengehäuse 8 an der Vorder- und Rückseite zumindest teilweise verschließen.

Darüber hinaus ist die Steuereinrichtung 22 derart konfiguriert, dass nach Empfang eines Steuersignals sich die hintere Walzenklappe 13 in dem Arbeitsbetriebsmodus in einer Schwimmstellung befindet, in der die hintere Walzenklappe auf dem abgefrästen Boden mit einer vorgegebenen Aufstandskraft aufliegt, so dass das Walzengehäuse 8 an der Rückseite zumindest teilweise verschlossen ist. Einrichtungen zur Positionierung einer Walzenklappe in einer Schwimmstellung gehören zum Stand der Technik (DE 10 2004 012 382 B4). Die vordere Walzenklappe 12 wird im Arbeitsbetriebsmodus von der Steuereinrichtung 22 derart angestellt, dass sich die vordere Walzenklappe in einer vorgegebenen, vorzugsweise leicht angehobenen Position befindet, so dass sie sich beim Vorschub der Baumaschine nicht verkanten kann (Fig. 4).

Die Steuereinrichtung 22 der erfindungsgemäßen Baumaschine erlaubt die Vorgabe von mehreren Fahrtrichtungsumkehr-Steuermodi in Abhängigkeit von dem Empfang eines dem jeweiligen Fahrtrichtungsumkehr-Steuermodus zugeordneten Fahrtrichtungsumkehr-Steuersignals. Bei dem vorliegenden Ausführungsbeispiel ist die Bedieneinheit 23 derart konfiguriert, dass ein Fahrtrichtungsumkehr-Steuersignal erzeugt wird, wenn der Fahrzeugführer durch Betätigung eines Tasters oder einer der Schaltflächen 25 des Touchscreens 24 einen Fahrtrichtungsumkehr-Steuermodus auswählt, so dass ein Fahrtrichtungsumkehr-Steuersignal erzeugt wird. Ein Fahrtrichtungsumkehr-Steuersignal kann aber auch von anderen Einheiten erzeugt werden, beispielsweise einem Satellitennavigationssystem 26 (GNSS), das derart konfiguriert ist, dass das Steuersignal an einem bestimmten Wegpunkt in einem Koordinatensystem erzeugt wird. Die Einheit kann aber auch derart konfiguriert sein, dass das Steuersignal erzeugt wird, wenn eine vorgegebene Markierung an der Wegstrecke erkannt wird, die von der Baumaschine zurückgelegt wird. Ein Steuersignal kann auch nach Zurücklegen einer vorgegebenen Wegstrecke oder Ablauf eines vorgegebenen Zeitintervalls erfolgen. In Fig. 2 sind derartige Einheiten 26, 27 zur Erzeugung von Fahrtrichtungsumkehr-Steuersignalen, die mit der Steuereinrichtung zusammenwirken, nur andeutungsweise dargestellt. Nachfolgend werden die einzelnen Fahrtrichtungsumkehr-Steuermodi, die vom Maschinenführer durch Betätigung der betreffenden Schaltflächen 25 des Touchscreens 24 ausgewählt werden können und/oder nach Empfang eines entsprechenden Steuersignals von einer der beispielhaft benannten Einheiten 26, 27 durchgeführt werden, im Einzelnen beschrieben.

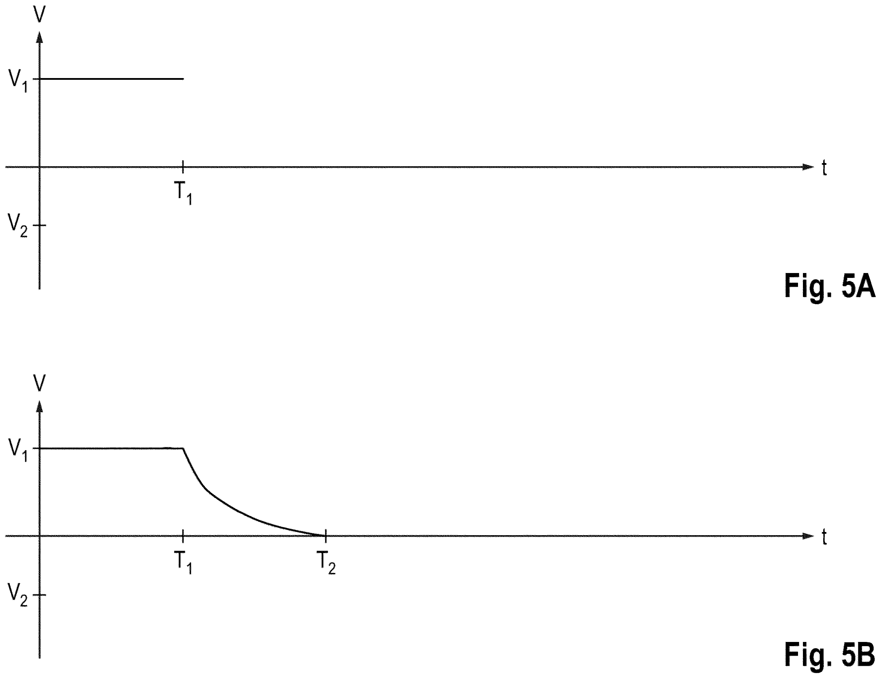

Die Figuren Fig. 5A bis 5D veranschaulichen einen Fahrtrichtungsumkehr-Steuermodus für eine automatisierte Fahrtrichtungsumkehr in dem in Fig. 3 gezeigten Transportmodus. Die Steuereinrichtung 22 steuert die Fräs-/Mischwalzen-Verstelleinrichtung 16 derart an, dass die Position der Fräs-/Mischwalze 9 während der Fahrtrichtungsumkehr beibehalten wird und steuert die Walzenklappen-Verstelleinrichtung 19 derart an, dass die Position der Walzenklappen 12, 13 während der Fahrtrichtungsumkehr beibehalten wird.

Die Baumaschine 1 fährt zunächst mit einer Geschwindigkeit $V_1$, die vom Fahrzeugführer vor einer Fahrtrichtungsumkehr vorgegeben werden kann. Nachfolgend wird mit dem Index 1 die Geschwindigkeit der Baumaschine vor einer Fahrtrichtungsumkehr und mit dem Index 2 die Geschwindigkeit nach einer Fahrtrichtungsumkehr bezeichnet. Die Geschwindigkeit $V_1$ kann der Fahrzeugführer beispielweise durch Betätigung eines Bedienelements 29 an der Bedieneinheit 23 vorgeben, wobei die Geschwindigkeit $V_1$ in einem Speicher 28 abgelegt wird, der von Steuereinrichtung 22 ausgelesen wird (Fig. 2). Die Geschwindigkeit $V_1$ kann der Fahrzeugführer davon abhängig machen, ob sich die Baumaschine im Transportmodus oder Arbeitsbetriebsmodus befindet. Im Allgemeinen sollte die Geschwindigkeit $V_1$ im Arbeitsbetriebsmodus kleiner als im Transportmodus sein.

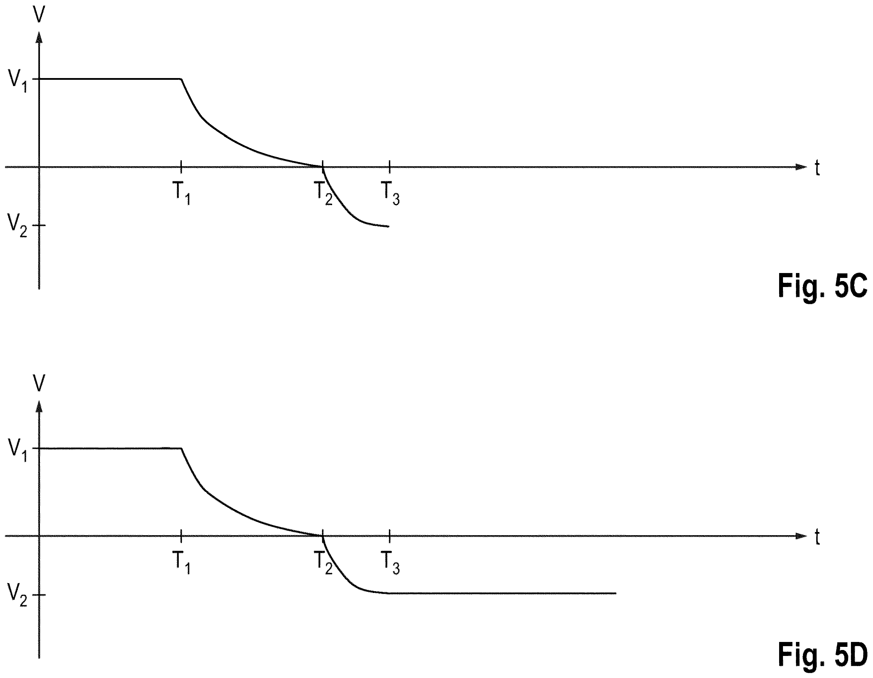

Wenn der Fahrzeugführer die Schaltfläche 25 zur Auswahl des betreffenden Fahrtrichtungsumkehr-Steuermodus betätigt, wird das betreffende Fahrtrichtungsumkehr-Steuersignal erzeugt (Fig. 5A). Nach Empfang des Fahrtrichtungsumkehr-Steuersignals zum Zeitpunkt $T_1$ verringert die Antriebseinrichtung 21 die vorgegebene erste Vorschubgeschwindigkeit $V_1$, mit der die Baumaschine in die erste Fahrtrichtung fährt, bis zum Stillstand der Baumaschine zum Zeitpunkt $T_2$ entsprechend einem vorgegebenen Geschwindigkeitsprofil (Fig. 5B). Das Geschwindigkeitsprofil wird von der Steuereinrichtung 22 vorgegeben. Bei dem vorliegenden Ausführungsbeispiel gibt die Steuereinrichtung 22 für das Abbremsen aus der Vorwärtsfahrt ein bestimmtes beispielsweise nicht lineares Geschwindigkeitsprofil vor, das von verschiedenen Maschinenparametern abhängig sein kann, beispielsweise von der zuvor vorgegebenen ersten Geschwindigkeit $V_1$, der Motorlast, der Fräswalzendrehzahl, der Last auf den Hubsäulen der Baumaschine etc. Nach dem Stillstand der Baumaschine treibt die Antriebseinrichtung 21 die Räder 2, 3 in die entgegengesetzte Richtung an, wobei die Antriebeinrichtung die Geschwindigkeit in die zweite Fahrtrichtung wieder bis zu einer vorgegebenen zweiten Geschwindigkeit $V_2$ erhöht. Bei dem vorliegenden Ausführungsbeispiel wird die Baumaschine unmittelbar nach dem Stillstand wieder bis zum Zeitpunkt $T_3$ beschleunigt, so dass die Baumaschine nicht für ein vorgegebenes Zeitintervall $\Delta T$ stillsteht (Fig. 5C). Daraufhin bewegt sich die Baumaschine mit der zweiten Geschwindigkeit $V_2$ (Fig. 5D).

Die zweite Geschwindigkeit $V_2$ kann der Maschinenführer ebenfalls durch Betätigung eines Bedienelements 30 an der Bedieneinheit 23 vorgeben, wobei auch die Geschwindigkeit $V_2$ in dem Speicher 28 abgelegt wird, der von Steuereinrichtung 22 ausgelesen wird (Fig. 2). Die Geschwindigkeit $V_2$ kann wieder davon abhängig sein, ob sich die Baumaschine im Transportmodus oder Arbeitsbetriebsmodus befindet. Im Allgemeinen sollte die Geschwindigkeit $V_2$ im Arbeitsbetriebsmodus kleiner als im Transportmodus sein. In den Figuren sind die Geschwindigkeitsverläufe nur beispielshaft dargestellt.

Eine alternative Ausführungsform sieht vor, dass die Geschwindigkeit $V_2$ in Abhängigkeit von der ersten Geschwindigkeit $V_1$ automatisch ermittelt wird. Die Steuereinrichtung 22 berechnet die zweite Geschwindigkeit $V_2$ dann beispielsweise nach der Gleichung

$$V_2 = V_1 \times k,$$

wobei k ein Faktor ist, der größer als 0 und kleiner als 1 ist.

Nachfolgend wird ein weiterer Fahrtrichtungsumkehr-Steuermodus für eine automatisierte Fahrtrichtungsumkehr in dem in Fig. 4 gezeigten Arbeitsbetriebsmodus beschrieben, wobei die Steuereinrichtung 22 die Fräs-/Mischwalzen-Verstelleinrichtung 16 derart ansteuert, dass die Position der Fräs-/Mischwalze 9 während der Fahrtrichtungsumkehr beibehalten wird, aber die Walzenklappen-Verstelleinrichtung 19 derart ansteuert, dass die Position der Walzenklappen 12, 13 während der Fahrtrichtungsumkehr verändert wird.

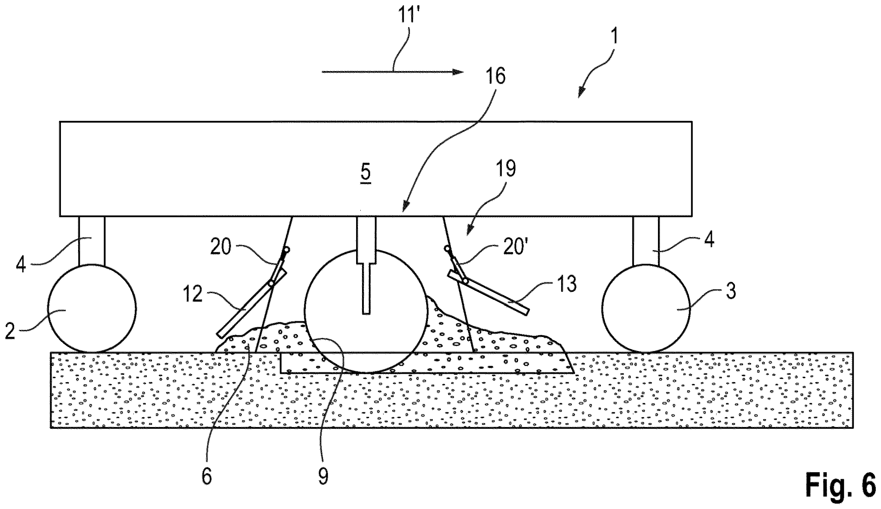

Fig. 4 zeigt die Position der vorderen und hinteren Walzenklappe 12, 13 während der Vorwärtsfahrt 11 mit der Geschwindigkeit $V_1$. Die Steuereinrichtung 22 steuert vor der Fahrtrichtungsumkehr die Walzenklappen-Verstelleinrichtung 19 der vorderen und hinteren Walzenklappe 12, 13 derart an, dass die vordere Walzenklappe 12 sich in einer vorgegebenen angehobenen Position befindet und die hintere Walzenklappe 13 in einer Schwimmstellung auf dem aufgeworfenen Boden aufliegt. Fig. 6 zeigt die Position der vorderen und hinteren Walzenklappe 12, 13 während der Rückwärtsfahrt in der entgegengesetzten Fahrtrichtung 11' mit der Geschwindigkeit $V_2$. Nach der Fahrtrichtungsumkehr befindet sich die zuvor hintere Walzenklappe 13 in einer angehobenen Position und die zuvor vordere Walzenklappe 12 liegt in einer Schwimmstellung auf dem Boden auf. Die hintere Walzenklappe 13 nimmt dabei nach der Richtungsumkehr eine äquivalente Stellung, beispielsweise eine geöffnete oder geschlossene Stellung, wie die vordere Walzenklappe 12 vor der Richtungsumkehr ein.

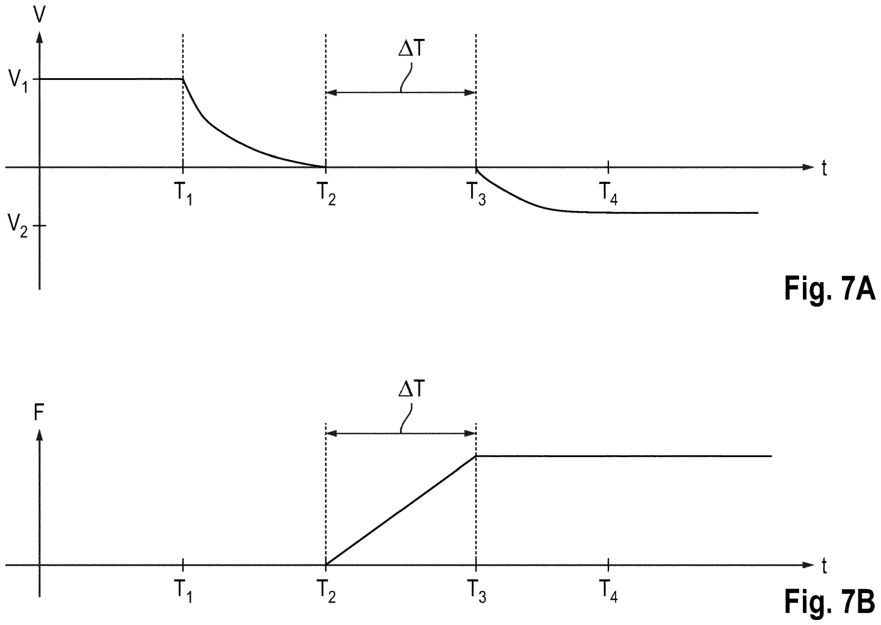

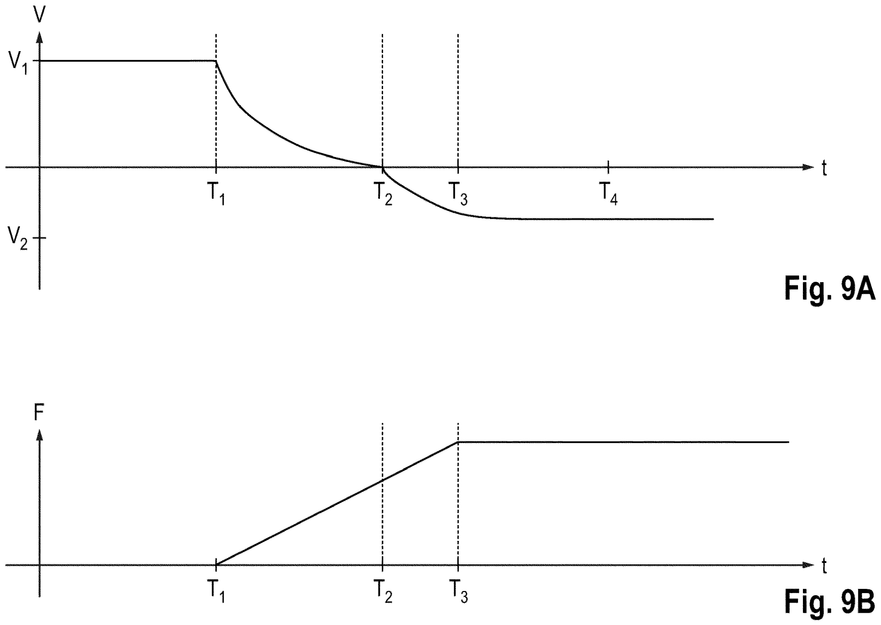

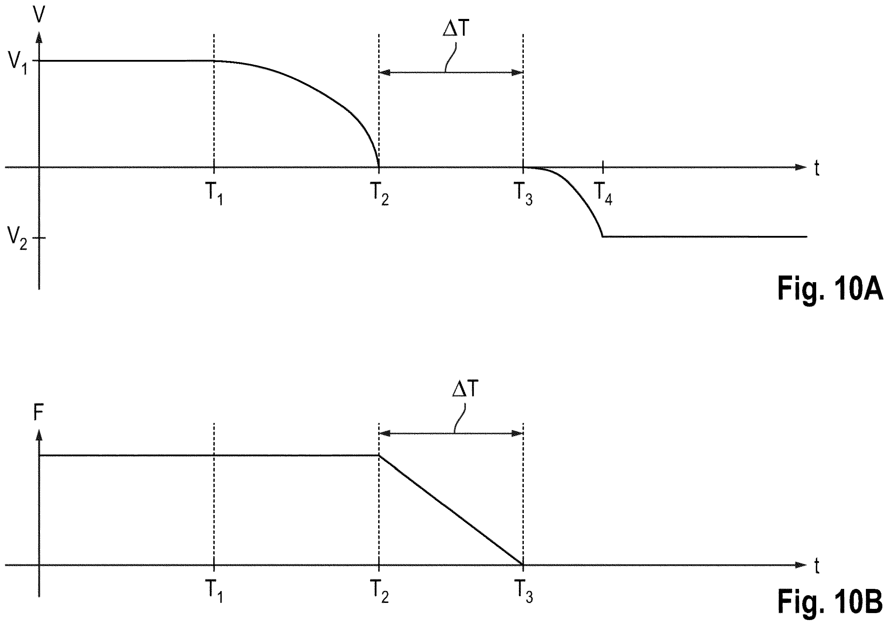

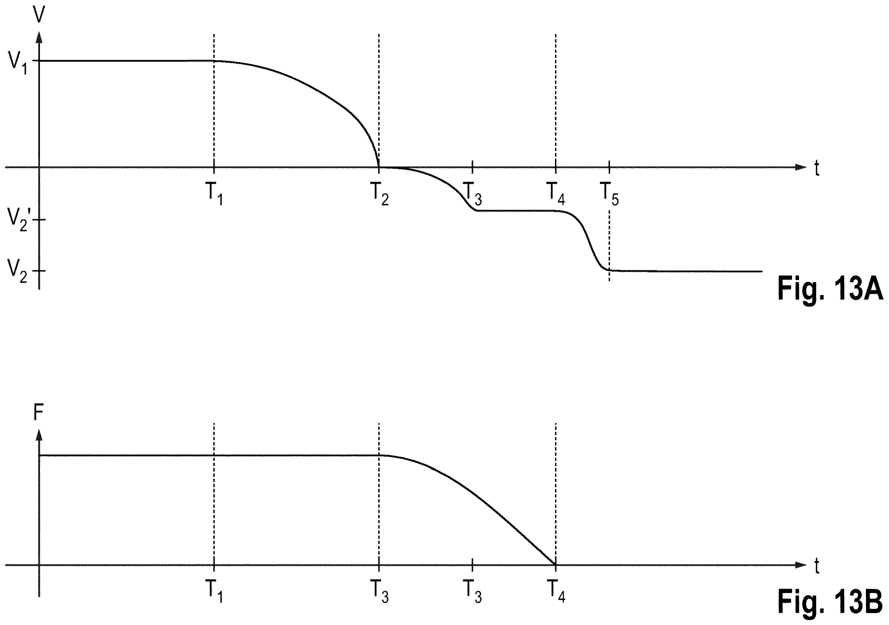

Nachfolgend werden weitere Fahrtrichtungsumkehr-Steuermodi unter Bezugnahme auf die Figuren 7A, 7B bis 13A, 13B beschrieben, die eine automatisierte Fahrtrichtungsumkehr mit einem gleichzeitigen Wechsel des Betriebsmodus von einem Transportmodus in einen Arbeitsbetriebsmodus (Figuren 7A, 7B bis 9A, 9B) oder einem gleichzeitigen Wechsel des Betriebsmodus von einem Arbeitsbetriebsmodus in einen Transportmodus (Figuren 10A, 10B bis 13A, 13B) veranschaulichen.

Für die einzelnen Fahrtrichtungsumkehr-Steuermodi, die der Maschinenführer auswählen kann oder automatisch vorgegeben werden, ist die Steuereinrichtung 22 derart konfiguriert, dass sich die Baumaschine 1 bei einer initiierten Fahrtrichtungsumkehr im Gelände wie folgt bewegt und die nachfolgenden Einstellungen der Fräs-/Mischwalze 9 und/oder der Walzenklappen 12, 13 vorgenommen werden.

Die Figuren 7A und 7B veranschaulichen einen Fahrtrichtungsumkehr-Steuermodus für eine Fahrtrichtungsumkehr mit einem Wechsel von dem Transportmodus in den Arbeitsbetriebsmodus. Die Baumaschine 1 bewegt sich zunächst mit der vom Fahrzeugführer vorgegebenen Geschwindigkeit $V_1$. Zum Zeitpunkt $T_1$ wird die Geschwindigkeit V nach einem vorgegebenen, nicht linearen Geschwindigkeitsprofil bis zum Stillstand der Baumaschine zum Zeitpunkt $T_2$ verringert (V=0). Die Baumaschine steht für das Zeitintervall $\Delta T$ bis zum Zeitpunkt $T_3$ still. Anschließend treibt die Antriebseinrichtung 21 die Räder 2, 3 der Baumaschine in die entgegengesetzte Fahrtrichtung an, wobei die Geschwindigkeit der Baumaschine wieder nach einem vorgegebenen, nicht linearen Geschwindigkeitsprofil, das sich von dem Geschwindigkeitsprofil vor der Fahrtrichtungsumkehr unterscheidet, solange erhöht wird, bis die Baumaschine zum Zeitpunkt $T_4$ die Geschwindigkeit $V_2$, die kleiner als die Geschwindigkeit $V_1$ ist, erreicht hat (Fig. 7A).

Bei dem vorliegenden Ausführungsbeispiel erfolgt der Wechsel von dem Transportmodus in den Arbeitsbetriebsmodus in dem Zeitintervall $\Delta T$. Die Steuereinrichtung steuert die Fräs-/Mischwalzen-Verstelleinrichtung 19 zum Zeitpunkt $T_2$ derart an, dass die Fräs-/Mischwalze 9 nach einem vorgegebenen Profil aus der oberen Position (Fig. 3) in die untere Position abgesenkt wird (Fig. 7B). Bei dem vorliegenden Ausführungsbeispiel wird die Fräs-/Mischwalze 9 mit einer konstanten Geschwindigkeit abgesenkt, so dass die Frästiefe F kontinuierlich zunimmt. Die Fräs-/Mischwalze 9 erreicht die untere Position zu dem Zeitpunkt $T_3$, zu dem die Baumaschine wieder in die entgegengesetzte Fahrtrichtung zu fahren beginnt (Fig. 7A). Der Wechsel von dem Transportmodus in den Arbeitsbetriebsmodus wird bei diesem Fahrtrichtungsumkehr-Steuermodus automatisch eingeleitet, sobald die Baumaschine stillsteht. Alternativ kann dieser Wechsel aber auch nur dann erfolgen, wenn die Steuereinrichtung ein entsprechendes Steuersignal empfängt, das erzeugt wird, wenn der Maschinenführer an der Bedieneinheit ein Bedienelement betätigt.

Die Steuereinrichtung kann weiterhin derart konfiguriert sein, dass die Walzenklappen 12, 13 aus der in Fig. 3 gezeigten das Walzengehäuse 8 zumindest teilweise verschließenden Position, in eine Position verfahren werden, in der in Abhängigkeit von der Fahrtrichtung sich die vordere Walzenklappe 12 in einer angehobenen Position befindet und die hintere Walzenklappe 13 in einer Schwimmstellung auf dem Boden aufliegt oder die hintere Walzenklappe sich in einer angehobenen Position befindet und die vordere Walzenklappe in einer Schwimmstellung auf dem Boden aufliegt (Fig. 4). Darüber hinaus kann die Steuereinrichtung 22 auch weitere Eingriffe in die Maschinensteuerung vornehmen, um den Fräs-/Mischbetrieb aufzunehmen. Die Steuereinrichtung kann insbesondere eine an der Baumaschine vorgesehene Einrichtung zur Zugabe von Bindemittel aktivieren.

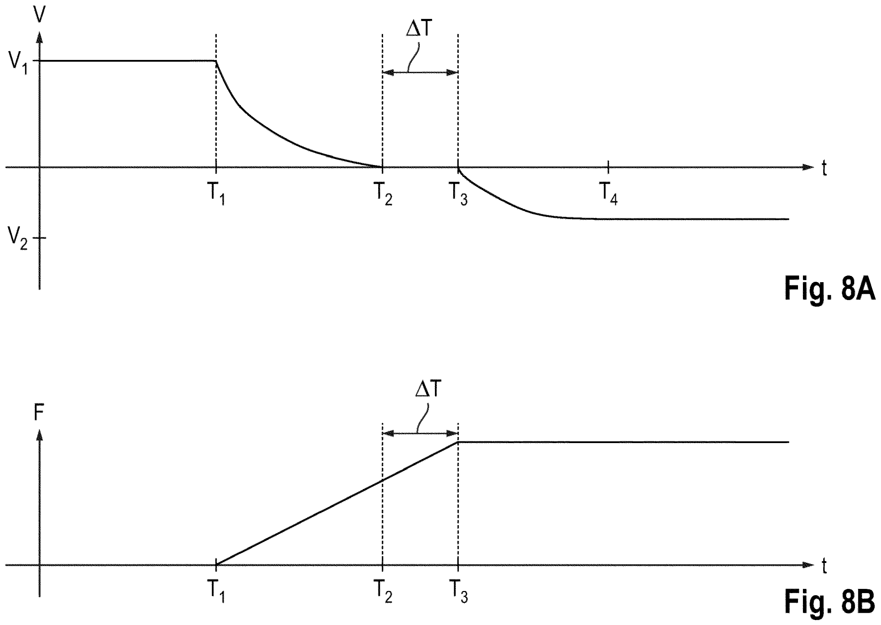

Die Figuren 8A und 8B veranschaulichen einen weiteren Fahrtrichtungsumkehr-Steuermodus für eine Fahrtrichtungsumkehr mit einem Wechsel von dem Transportmodus in den Arbeitsbetriebsmodus. Dieser Fahrtrichtungsumkehr-Steuermodus unterscheidet sich von dem Steuermodus nach den Figuren 7A und 7B durch ein kürzeres Zeitintervall $\Delta T$ und dadurch, dass die Steuereinrichtung die Fräs-/Mischwalze 9 bereits zum Zeitpunkt $T_1$ abzusenken beginnt, wenn die Steuereinrichtung 22 die Geschwindigkeit V der Baumaschine 1 zu verringern beginnt. Zum Zeitpunkt $T_2$ kommt die Baumaschine zum Stillstand. Zum Zeitpunkt $T_3$ befindet sich die Fräs-/Mischwalze 9 in der unteren Position und die Baumaschine setzt sich in der entgegengesetzten Fahrtrichtung wieder in Bewegung. Bei dem vorliegenden Ausführungsbeispiel wird die Fräs-/Mischwalze 9 mit einer konstanten Geschwindigkeit abgesenkt, so dass die Frästiefe F kontinuierlich zunimmt.

Die Figuren 9A und 9B veranschaulichen einen weiteren Fahrtrichtungsumkehr-Steuermodus für eine Fahrtrichtungsumkehr mit einem Wechsel von dem Transportmodus in den Arbeitsbetriebsmodus. Dieser Fahrtrichtungsumkehr-Steuermodus unterscheidet sich von dem Steuermodus nach den Figuren 8A und 8B dadurch, dass die Baumaschine 1 nicht ein vorgegebenes Zeitintervall stillsteht. Die Steuereinrichtung 22 beschleunigt die Baumaschine 1 bereits zum Zeitpunkt $T_2$ wieder in der entgegengesetzten Fahrtrichtung. Die Fräs/-Mischwalze wird in dem Zeitintervall $\Delta T = T_3 - T_1$ abgesenkt, während die Baumaschine abgebremst und beschleunigt wird.

Die Figuren 10A und 10B veranschaulichen einen Fahrtrichtungsumkehr-Steuermodus für eine Fahrtrichtungsumkehr mit einem Wechsel von dem Arbeitsbetriebsmodus in den Transportmodus. Die Baumaschine 1 bewegt sich zunächst mit der vom Fahrzeugführer vorgegebenen Geschwindigkeit $V_1$. Zum Zeitpunkt $T_1$ wird die Geschwindigkeit V nach einem vorgegebenen, nicht linearen Geschwindigkeitsprofil, das sich von dem Geschwindigkeitsprofil von den Figuren 7A, 8A, 9A unterscheidet, bis zum Stilltand der Baumaschine zum Zeitpunkt $T_2$ verringert (V=0). Die Baumaschine steht für das Zeitintervall $\Delta T$ bis zum Zeitpunkt $T_3$ still. Anschließend treibt die Antriebseinrichtung 21 die Räder 2, 3 der Baumaschine in die entgegengesetzte Fahrtrichtung an, wobei die Geschwindigkeit V der Baumaschine wieder nach einem vorgegebenen, nicht linearen Geschwindigkeitsprofil, das sich von dem Geschwindigkeitsprofil vor der Fahrtrichtungsumkehr unterscheidet, solange erhöht wird, bis die Baumaschine zum Zeitpunkt $T_4$ die Geschwindigkeit $V_2$, die kleiner als die Geschwindigkeit $V_1$ ist, erreicht hat. Das Geschwindigkeitsprofil der Fig. 10A unterscheidet sich von den Profilen der Figuren 7A, 8A, 9A dadurch, dass die Verringerung der Geschwindigkeit erst langsam und dann immer schneller erfolgt.

Bei dem vorliegenden Ausführungsbeispiel erfolgt der Wechsel von dem Arbeitsbetriebsmodus in den Transportmodus in dem Zeitintervall $\Delta T$. Die Steuereinrichtung 22 steuert die Fräs-/Mischwalzen-Verstelleinrichtung zum Zeitpunkt $T_2$ derart an, dass die Fräs/-Mischwalze 9 aus der unteren Position (Fig. 4) in die obere Position (Fig. 3) nach einem vorgegebenen Profil angehoben wird. Bei dem vorliegenden Ausführungsbeispiel wird die Fräs/-Mischwalze 9 mit einer konstanten Geschwindigkeit angehoben, so dass die Frästiefe F kontinuierlich abnimmt. Die Fräs/-Mischwalze 9 erreicht die obere Position zu dem Zeitpunkt $T_3$, zu dem die Baumaschine wieder in die entgegengesetzte Fahrtrichtung zu fahren beginnt (Fig. 10B).

Während die Fräs/-Mischwalze 9 angehoben wird, kann die Steuereinrichtung 22 die Fräs-/Mischwalzen-Verstelleinrichtung 16 derart ansteuern, dass die Walzenklappen 12, 13 aus der in Fig. 4 gezeigten Position in die in Fig. 3 gezeigte Position verschwenkt werden. Die Verstellung der Walzenklappen 12, 13 in die das Walzengehäuse zumindest teilweise verschließende Position kann aber auch erst dann erfolgen, wenn sich die Fräs-/Mischwalze 9 bereits in der oberen Position befindet.

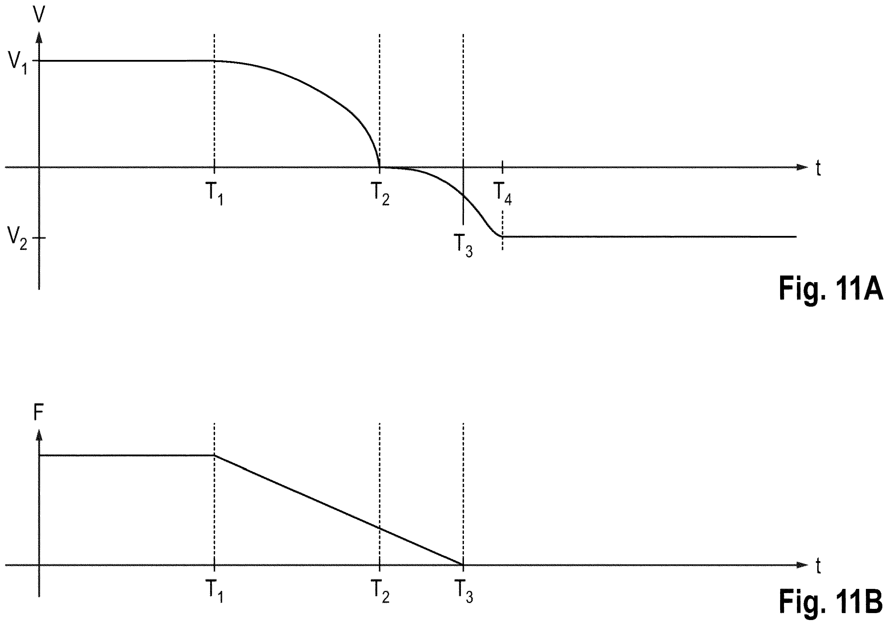

Die Figuren 11A und 11B veranschaulichen einen weiteren Fahrtrichtungsumkehr-Steuermodus für eine Fahrtrichtungsumkehr mit einem Wechsel von dem Arbeitsbetriebsmodus in den Transportmodus. Dieser Fahrtrichtungsumkehr-Steuermodus unterscheidet sich von dem Steuermodus nach den Figuren 10A und 10B dadurch, dass die Baumaschine 1 nicht ein vorgegebenes Zeitintervall stillsteht. Die Steuereinrichtung 22 beschleunigt die Baumaschine 1 bereits zum Zeitpunkt $T_2$ wieder in der entgegengesetzten Fahrtrichtung. Die Fräs/-Mischwalze 9 wird in dem Zeitintervall $\Delta T = T_3 - T_1$ angehoben, in dem die Baumaschine abgebremst und beschleunigt wird. Während die Fräs/- Mischwalze 9 angehoben wird oder nachdem sich die Fräs-/Mischwalze 9 bereits in der oberen Position befindet, kann wieder die Verstellung der Walzenklappen 12, 13 in die das Walzengehäuse zumindest teilweise verschließende Stellung erfolgen,

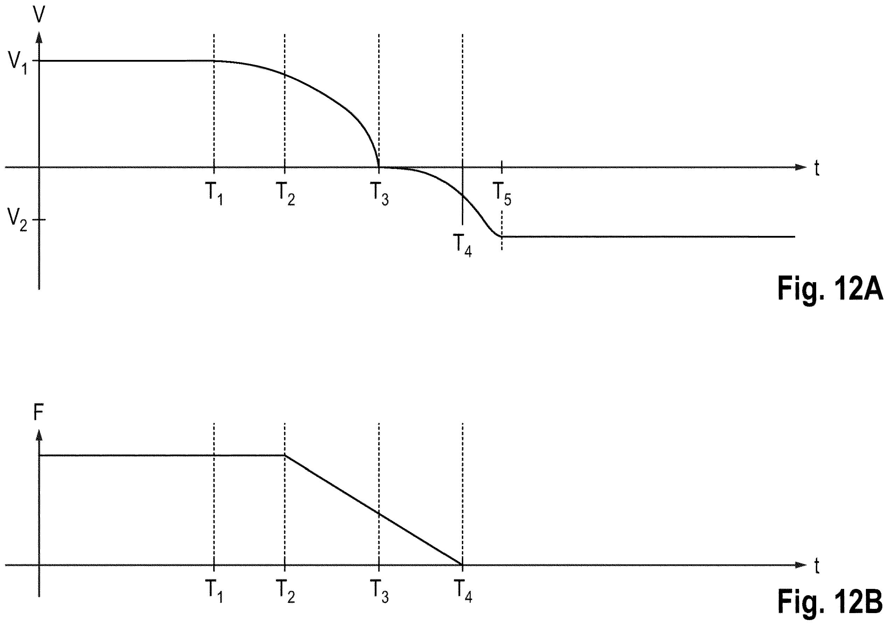

Die Figuren 12A und 12B veranschaulichen einen weiteren Fahrtrichtungsumkehr-Steuermodus für eine Fahrtrichtungsumkehr mit einem Wechsel von dem Arbeitsbetriebsmodus in den Transportmodus. Dieser Fahrtrichtungsumkehr-Steuermodus unterscheidet sich von dem Steuermodus nach den Figuren 11A und 11B dadurch, dass die Fräs/-Mischwalze 9 erst zu einem späteren Zeitpunkt $T_2$ nach einem vorgegebenen linearen Profil angehoben wird. Da die Fräs/-Mischwalze 9 erst später angehoben wird, ist die konstante Geschwindigkeit, mit der die Fräs/-Mischwalze angehoben wird, größer, was durch eine steilere Kurve zum Ausdruck kommt.

Die Figuren 13A und 13B veranschaulichen einen weiteren Fahrtrichtungsumkehr-Steuermodus für eine Fahrtrichtungsumkehr mit einem Wechsel von dem Arbeitsbetriebsmodus in den Transportmodus. Die Baumaschine 1 fährt zunächst mit der Geschwindigkeit $V_1$. Zum Zeitpunkt $T_1$ wird die Geschwindigkeit V nach einer nicht linearen Geschwindigkeitskurve so lange verringert, bis die Baumaschine zum Zeitpunkt $T_2$ zum Stillstand kommt. Anschließend treibt die Antriebseinrichtung 21 die Räder 2, 3 der Baumaschine in die entgegengesetzte Fahrtrichtung an, wobei die Geschwindigkeit der Baumaschine wieder nach einem vorgegebenen nicht linearen Geschwindigkeitsprofil, das sich von dem Geschwindigkeitsprofil vor der Fahrtrichtungsumkehr unterscheidet, solange erhöht wird, bis die Baumaschine zum Zeitpunkt $T_3$ die Geschwindigkeit $V_2'$, die kleiner als die Geschwindigkeit $V_1$ ist, erreicht hat. Daraufhin wird die Geschwindigkeit bis zum Zeitpunkt $T_4$ konstant gehalten, woraufhin die Geschwindigkeit nach einer nicht linearen Geschwindigkeitskurve bis zum Zeitpunkt $T_5$ auf die Geschwindigkeit $V_2$ weiter erhöht wird. In dem Zeitintervall $\Delta T = T_3 - T_2$ wird die Fräs/-Mischwalze 9 nach einer nicht linearen Kurve angehoben und in dem Zeitintervall $\Delta T = T_4 - T_3$ nach einer linearen Kurve angehoben. Dieses Ausführungsbeispiel soll verdeutlichen, dass die Fräs/- Mischwalze nach der Umkehr der Fahrtrichtung derart gesteuert werden kann, dass sich die Achse der Fräs/-Mischwalze beim Anheben auf einer vorgegebenen Bahnkurve bewegt, die sich durch die vorgegebenen Profile vorgeben lässt.

**Patentansprüche**

1. Selbstfahrende Baumaschine zum Bearbeiten des Bodens, insbesondere Stabilisierer oder Recycler, aufweisend

   einen von auf dem Boden (6) aufstehenden Rädern (2, 3) oder Kettenlaufwerken getragenen Maschinenrahmen (5) und ein an dem Maschinenrahmen (5) angeordnetes Walzengehäuse (8), in dem eine drehbare Fräs-/Mischwalze (9) zum Bearbeiten des Bodens vorgesehen ist, eine Antriebseinrichtung (21) zum Antreiben der Räder (2, 3) oder Kettenlaufwerke und eine mit der Antriebseinrichtung (21) zusammenwirkende Steuereinrichtung (22) zum Ansteuern der Antriebseinrichtung (21), welche einen ersten Fahrmodus vorsieht, in dem die Räder (2, 3) oder Kettenlaufwerke derart angetrieben werden, dass die Baumaschine mit einer vorgegebenen Geschwindigkeit in eine erste Fahrtrichtung (11) fährt, und einen zweiten Fahrmodus vorsieht, in dem die Räder (2, 3) oder Kettenlaufwerke derart angetrieben werden, dass die Baumaschine mit einer vorgegebenen Geschwindigkeit in eine zweite Fahrtrichtung (1 1') fährt, die der ersten Fahrtrichtung entgegengesetzt ist, wobei die erste Fahrtrichtung eine Hauptfahrtrichtung ist,
   **dadurch gekennzeichnet, dass**
   die Steuereinrichtung (22) für eine automatische Fahrtrichtungsumkehr derart konfiguriert ist, dass die Antriebseinrichtung (21) nach Empfang eines Fahrtrichtungsumkehr-Steuersignals die vorgegebene erste Geschwindigkeit, mit der die Baumaschine in die erste Fahrtrichtung (11) fährt, bis zum Stillstand der Baumaschine verringert und nach dem Stillstand der Baumaschine die Räder (2, 3) oder Kettenlaufwerke in die entgegengesetzte Richtung antreibt, wobei die Antriebeinrichtung (21) die Geschwindigkeit in die zweite Fahrtrichtung (1 1') bis zu einer vorgegebenen zweiten Geschwindigkeit erhöht.

2. Selbstfahrende Baumaschine nach Anspruch 1, **dadurch gekennzeichnet, dass** die erste Geschwindigkeit, in der sich die Baumaschine in die erste Fahrtrichtung (11) bewegt, größer als die zweite Geschwindigkeit ist, in der sich die Baumaschine in die zweite Fahrtrichtung (1 1') bewegt.

3. Selbstfahrende Baumaschine nach Anspruch 1 oder 2, **dadurch gekennzeichnet, dass** die Baumaschine eine Eingabe- und/oder Bedieneinheit (23) und eine Speichereinheit (28) aufweist, die derart konfiguriert sind, dass ein Wert für die erste und die zweite Geschwindigkeit mit der Eingabe- und/oder Bedieneinheit eingebbar und in der Speichereinheit speicherbar ist, wobei die Steuereinrichtung (22) derart konfiguriert ist, dass die Steuereinrichtung den Wert für die erste und zweite Geschwindigkeit aus der Speichereinheit (28) ausliest.

4. Selbstfahrende Baumaschine nach Anspruch 1 oder 2, **dadurch gekennzeichnet, dass** die Baumaschine eine Eingabe- und/oder Bedieneinheit (23) und eine Speichereinheit (28) aufweist, die derart konfiguriert sind, dass ein Wert für die erste Geschwindigkeit mit der Eingabe- und/oder Bedieneinheit eingebbar und in der Speichereinheit (28) speicherbar ist, wobei die Steuereinrichtung (22) derart konfiguriert ist, dass aus dem Wert der ersten Geschwindigkeit nach einer vorgegebenen funktionalen Beziehung, die in der Speichereinheit (28) abgelegt ist, ein Wert für die zweite Geschwindigkeit berechnet wird, der in der Speichereinheit abgelegt wird.

5. Selbstfahrende Baumaschine nach einem der Ansprüche 1 bis 4, **dadurch gekennzeichnet, dass** die Baumaschine eine Fräs-/Mischwalzen-Verstelleinrichtung (16) zum Verstellen der Höhe der Fräs-/Mischwalze (9) gegenüber dem Boden (6) aufweist, wobei die Steuereinrichtung (22) mit der Fräs-/Mischwalzen-Verstelleinrichtung (16) derart zusammenwirkt, dass bei einer Fahrtrichtungsumkehr eine Höhenverstellung der Fräs-/Mischwalze gegenüber dem Boden erfolgt.

6. Selbstfahrende Baumaschine nach einem der Ansprüche 1 bis 5, **dadurch gekennzeichnet, dass** der Fräs-/Mischraum des Walzengehäuses (8) von einer in die Hauptfahrtrichtung weisenden, vorderen Walzenklappe (12) und einer entgegen der Hauptfahrtrichtung weisenden, hinteren Walzenklappe (13) zumindest teilweise verschließbar ist, und eine Walzenklappen-Verstelleinrichtung zum Verstellen der Stellung der vorderen Walzenklappe (12) und der hinteren Walzenklappe (13) vorgesehen ist, wobei die Steuereinrichtung (22) mit der Walzenklappen-Verstelleinrichtung (16) derart zusammenwirkt, dass bei einer Fahrtrichtungsumkehr eine Verstellung der vorderen Walzenklappe (12) und/oder der hinteren Walzenklappe (13) erfolgt.

7. Selbstfahrende Baumaschine nach einem der Ansprüche 5 oder 6, **dadurch gekennzeichnet, dass** die Steuereinrichtung (12) einen Transportbetriebsmodus vorsieht, in dem die Steuereinrichtung die Fräs-/Mischwalzen-Verstelleinrichtung (16) derart ansteuert, dass die Fräs-/Mischwalze (9) in eine obere Position angehoben ist, in der die Fräs-/Mischwalze mit dem Boden (6) außer Eingriff ist, und

die Steuereinrichtung einen Arbeitsbetriebsmodus vorsieht, in dem die Steuereinrichtung (12) die Fräs-/Mischwalzen-Verstelleinrichtung (16) derart ansteuert, dass die Fräs-/Mischwalze (9) in eine untere Position abgesenkt ist, in der die Fräs-/Mischwalze mit dem Boden (6) in Eingriff ist.

8. Selbstfahrende Baumaschine nach Anspruch 7, **dadurch gekennzeichnet, dass** die Steuereinrichtung (12) derart konfiguriert ist, dass bei einer Fahrtrichtungsumkehr die Steuereinrichtung (22) die Fräs-/Mischwalzen-Verstelleinrichtung (16) derart ansteuert, dass ein automatischer Wechsel von dem Arbeitsbetriebsmodus in den Transportbetriebsmodus oder ein automatischer Wechsel von dem Transportbetriebsmodus in den Arbeitsbetriebsmodus erfolgt.

9. Selbstfahrende Baumaschine nach Anspruch 7 oder 8, **dadurch gekennzeichnet, dass** die Steuereinrichtung (22) derart konfiguriert ist, dass die Steuereinrichtung einen ersten Fahrtrichtungsumkehr-Steuermodus für eine Fahrtrichtungsumkehr in dem Transportmodus vorsieht, in dem die Steuereinrichtung (22) die Fräs-/Mischwalzen-Verstelleinrichtung (16) derart ansteuert, dass die Position der Fräs-und/oder Mischwalze (9) während der Fahrtrichtungsumkehr beibehalten wird und die Walzenklappen-Verstelleinrichtung (19) derart ansteuert, dass die Position der Walzenklappen (12, 13) während der Fahrtrichtungsumkehr beibehalten wird.

10. Selbstfahrende Baumaschine nach einem der Ansprüche 7 bis 9, **dadurch gekennzeichnet, dass** die Steuereinrichtung (22) derart konfiguriert ist, dass die Steuereinrichtung einen zweiten Fahrtrichtungsumkehr-Steuermodus für eine Fahrtrichtungsumkehr in dem Arbeitsbetriebsmodus vorsieht, in dem die Steuereinrichtung (22) die Fräs-/Mischwalzen-Verstelleinrichtung (16) derart ansteuert, dass die Position der Fräs- und/oder Mischwalze (9) während der Fahrtrichtungsumkehr beibehalten wird und die Steuereinrichtung (22) vor der Richtungsumkehr die Walzenklappen-Verstelleinrichtung (19) der vorderen und hinteren Walzenklappe derart ansteuert, dass die vordere Walzenklappe (12) sich in einer angehobene Position befindet und die hintere Walzenklappe (13) in einer Schwimmstellung auf dem Boden aufliegt und nach der Richtungsumkehr die hintere Walzenklappe (13) sich in einer angehobenen Position befindet und die vordere Walzenklappe (12) in einer Schwimmstellung auf dem Boden aufliegt.

11. Selbstfahrende Baumaschine nach einem der Ansprüche 7 bis 10, **dadurch gekennzeichnet, dass** die Steuereinrichtung (22) derart konfiguriert ist, dass die Steuereinrichtung einen dritten Fahrtrichtungsumkehr-Steuermodus für eine Fahrtrichtungsumkehr mit einem Wechsel von dem Transportmodus in den Arbeitsbetriebsmodus vorsieht, in dem die Steuereinrichtung (22) die Fräs-/Mischwalzen-Verstelleinrichtung (16) derart ansteuert, dass die Fräs-/Mischwalze (9) von der oberen Position, in der die Fräs-Mischwalze mit dem Boden (6) außer Eingriff ist, in die untere Position abgesenkt wird, in der die Fräs-/Mischwalze mit dem Boden in Eingriff ist.

12. Selbstfahrende Baumaschine nach Anspruch 11, **dadurch gekennzeichnet, dass** die Steuereinrichtung derart konfiguriert ist, dass die Steuereinrichtung (22) in dem dritten Fahrtrichtungsumkehr-Steuermodus die Fräs-/Mischwalzen-Verstelleinrichtung (16) derart ansteuert, dass die Fräs-/Mischwalze (9) mit einer vorgegebenen Geschwindigkeit abgesenkt wird, wobei die Geschwindigkeit, mit der die Fräs-/Mischwalze abgesenkt wird, eine sich über die von der Baumaschine zurückgelegte Wegstrecke konstante Geschwindigkeit oder eine sich über die von der Baumaschine zurückgelegte Wegstrecke ändernde Geschwindigkeit ist.

13. Selbstfahrende Baumaschine nach Anspruch 11 oder 12, **dadurch gekennzeichnet, dass** die Steuereinrichtung (22) derart konfiguriert ist, dass die Steuereinrichtung in dem dritten Fahrtrichtungsumkehr-Steuermodus die Walzenklappen-Verstelleinrichtung (19) der vorderen und hinteren Walzenklappe (12, 13) derart ansteuert, dass sich die vordere Walzenklappe (12) nach dem Absenken der Fräs-/Mischwalze (9) in dem Arbeitsbetriebsmodus in einer angehobenen Position befindet und die hintere Walzenklappe (13) in einer Schwimmstellung auf dem Boden (6) aufliegt oder die hintere Walzenklappe sich in einer angehobenen Position befindet und die vordere Walzenklappe in einer Schwimmstellung auf dem Boden aufliegt.

14. Selbstfahrende Baumaschine nach einem der Ansprüche 7 bis 13, **dadurch gekennzeichnet, dass** die Steuereinrichtung (22) derart konfiguriert ist, dass die Steuereinrichtung einen vierten Fahrtrichtungsumkehr-Steuermodus für eine Fahrtrichtungsumkehr mit einem Wechsel von dem Arbeitsbetriebsmodus in den Transportmodus vorsieht, in dem die Steuereinrichtung (22) die Fräs-/Mischwalzen-Verstelleinrichtung (16) derart ansteuert, dass die Fräs-/Mischwalze (9) von der unteren Position, in der die Fräs-/Mischwalze mit dem Boden (6) in Eingriff ist, in die obere Position angehoben wird, in der die Fräs-/Mischwalze mit dem Boden außer Eingriff ist.

15. Selbstfahrende Baumaschine nach Anspruch 14, **dadurch gekennzeichnet, dass** die Steuereinrichtung derart konfiguriert ist, dass die Steuereinrichtung (22) in dem vierten Fahrtrichtungsumkehr-Steuermodus die Fräs- und/oder Mischwalzen-Verstelleinrichtung (16) derart ansteuert, dass die Fräs-/Mischwalze (9) mit einer vorgegebenen Geschwindigkeit angehoben wird, wobei die Geschwindigkeit, mit der die Fräs-/Mischwalze angehoben wird, eine sich über die von der Baumaschine zurückgelegte Wegstrecke konstante Geschwindigkeit oder eine sich über die von der Baumaschine zurückgelegte Wegstrecke ändernde Geschwindigkeit ist.

Fig. 1

**Fig. 2**

EP 4 442 905 A1

Fig. 3

Fig. 4

Fig. 5A

Fig. 5B

EP 4 442 905 A1

Fig. 5C

Fig. 5D

Fig. 6

Fig. 7A

Fig. 7B

Fig. 8A

Fig. 8B

EP 4 442 905 A1

Fig. 9A

Fig. 9B

**Fig. 10A**

**Fig. 10B**

EP 4 442 905 A1

Fig. 11A

Fig. 11B

Fig. 12A

Fig. 12B

Fig. 13A

Fig. 13B

Europäisches
Patentamt

European
Patent Office

Office européen
des brevets

# EUROPÄISCHER RECHERCHENBERICHT

**Nummer der Anmeldung**

EP 24 16 3487

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 190 398 A (SWISHER JR GEORGE W [US]) 2. März 1993 (1993-03-02) | 1-15 | INV. E01C21/00 E01C23/088 |
| Y | * das ganze Dokument * | 1-15 | |
| | ----- | | |
| Y | US 2015/204029 A1 (BORNEMANN DETLEF [DE] ET AL) 23. Juli 2015 (2015-07-23) * das ganze Dokument * | 1-15 | |
| | ----- | | |
| Y | DE 39 21 875 A1 (BOMAG GMBH [DE]) 17. Januar 1991 (1991-01-17) * das ganze Dokument * | 6 | |
| | ----- | | |

**RECHERCHIERTE SACHGEBIETE (IPC)**

E01C

Der vorliegende Recherchenbericht wurde für alle Patentansprüche erstellt

| Recherchenort | Abschlußdatum der Recherche | Prüfer |
|---|---|---|
| München | 9. August 2024 | Kerouach, May |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 3487

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-08-2024

| Im Recherchenbericht angeführtes Patentdokument | Datum der Veröffentlichung | Mitglied(er) der Patentfamilie | Datum der Veröffentlichung |
|---|---|---|---|
| US 5190398 A | 02-03-1993 | KEINE | |
| US 2015204029 A1 | 23-07-2015 | CN 104802732 A | 29-07-2015 |
| | | DE 102014201240 A1 | 23-07-2015 |
| | | EP 2899318 A1 | 29-07-2015 |
| | | US 2015204029 A1 | 23-07-2015 |
| DE 3921875 A1 | 17-01-1991 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2977514 B1

- DE 102004012382 B4